# EUROPEAN PATENT APPLICATION

(11) **EP 2 463 242 A2**
(43) Date of publication of application: **13.06.2012**
(21) Application number: 10806636.6
(22) Date of filing: 03.08.2010
(51) Int. Cl.: C02F 1/469, H01M 4/02, H01M 4/58, H01M 4/66

(54) **CAPACITIVE ELECTRODE FOR DEIONIZATION, AND ELECTROLYTIC CELL USING SAME**

(30) Priority: 07.08.2009 KR 20090072683
(71) Applicant: Sion Tech Co., Ltd, Yuseong-gu, Daejeon 305-500 (KR)
(72) Inventor: KANG, Kyung-Seok, Daejeon 305-345 (KR); CHOI, Jae-Hwan, Cheonan-si Chungcheongnam-do 330-746 (KR)
(74) Representative: Adam, Holger
(86) International application number: PCT/KR2010/005091
(87) International publication number: WO 2011/016662

(57) **Abstract**

Provided is an electrode using a polymeric solution containing a cation exchanger or an anion exchanger, and a capacitive electrolytic cell for deionization using the same.

## Description

### [Technical Field]

The present invention relates to a capacitive electrode for deionization, an electrolytic cell using the same, and a deionizing apparatus using the same. More particularly, the present invention relates to an electrode having ion selectivity and enabling efficient separation and removal of cation and anion.

### [Background Art]

Currently, an ionic material removal method using ion exchange resin is mainly used as a method for removing an ionic material in an aqueous solution. This method effectively separate most ionic materials, but causes a large amount of acidic, basic, or salty waste liquid to be generated during a procedure of recycling a resin after completion of ion exchange. Besides, separation techniques such as a reverse osmosis membrane method, an electrodialysis method, and the like are employed, but these methods have problems such as a decrease in treatment efficiency due to film fouling, cleansing of the polluted film, periodic exchange of films, and the like. A capacitive deionization technique using an electric double layer principle has been studied in order to solve the problems of the existing deionization techniques.

The capacitive deionization technology uses an adsorption reaction of ions by electric attraction in the electric double layer formed on a surface of an electrode when electric potential is applied to the electrode, and thus, the operation occurs at a low electrode potential (about 1 to 2V), and as a result, energy consumption is lower as compared with other deionization technologies. Therefore, the capacitive deionization technology is valued as a low-energy consumption type next generation deionization technology.

However, since deionization capability of the capacitive deionization technology is still not sufficient, the need to improve the deionizing capability has emerged. In a case where a large amount of water is treated and applied to home or industrial places, the treatment capability by the capacitive deionization technology never reaches to a necessary level and thus the use of the capacitive deionization technology is limited.

Another problem of the capacitive deionization technology is that ions adsorbed on the electric double layer are not completely desorbed therefrom, and thus, adsorption efficiency of the ions is rapidly decreased. According to a CDI process, ion materials are removed from inflow water by an ion adsorption reaction of electric double layers formed on a surface of an electrode when 1 to 2 volts (V) of electrode potential is applied. When the adsorbed ions reach a capacitive capacitance of the electrode, the adsorbed ions are desorbed by making the electrode potential to O volt (V) or converting to the contrary potential, thereby recycling the electrode. Here, the ions having a contrary charge to the ions adsorbed on the electrode move to the electric double layers due to a rapid change in electrode potential, and thus, all the adsorbed ions are not desorbed and remain on the surface of the electrode, which causes ion adsorption efficiency of the electrode to be decreased.

### [Technical Problem]

An object of the present invention is to provide an electrode having high adsorption efficiency of ions during the driving procedure of process while increasing a capacitive capacitance, an electrolytic cell using the same, and a water treatment deionizing apparatus using the same.

Also, an object of the present invention is to solve problems of decreased ion adsorption efficiency in the desorbing procedure of the adsorbed ions due to movement of ions having a contrary polarity to the adsorbed ions to the electrode. In other words, the object of the present invention is to develop the techniques for improving ion adsorption efficiency according to the continuous using or recycling.

Also, an object of the present invention is to provide a new electrode capable of exhibiting ion selectivity by using a polymer having a functional group having ion exchange capacity as a binder material, an electrolytic cell using the same, and a water treatment deionizing apparatus manufactured by using the same.

### [Technical Solution]

In one general, the present invention is **characterized in that** an ion exchangeable polymer resin, that is, a polymer resin containing a functional group having ion exchange capacity is added as one constituent component at the time of manufacturing an electrode, to produce an ion selective electrode capable of removing or collecting various ions present in water at the time of water treatment or heavy metals or noble metals at the time of waste treatment, thereby improving ion adsorption and desorption efficiency.

Specifically, the present invention can improve ion adsorption efficiency and increase an ion adsorption rate. In addition, according to the present invention, in an electrochemical cell using the ion selective electrode, an electrode using a polymer resin having a cation exchange group may be used as an anode and an electrode using a polymer resin having an anion exchange group may be used as a cathode. Here, an ion exchange resin may be added to only one electrode or may be added to both the cathode and the anode.

Further, the present invention is **characterized in that** an electrode using a cation exchange polymer passes only cations therethrough and an electrode using an anion exchange polymer solution passes only anions therethrough can be simply and economically manufactured. In addition, the present invention is characterized by providing an electrode having very superior deionization efficiency, an electrolytic cell using the same, and a deionizing apparatus using the same.

More specifically, a method of the present invention includes:
(a) dissolving a polymer resin having a cation exchange group or an anion exchange group in an organic solvent to prepare an ion selective polymer solution;
(b) adding an electrode active material to the polymer solution to prepare a slurry; and
(c) coating the slurry on a current collector.

The method may further include (d) removing the organic solvent from the slurry coated on the current collector to thereby manufacture a sheet type electrode, after step (c).

In addition, when a conductive material is further added in step (d), electric conductivity of the electrode can be further improved.

Further, in order to manufacture the electrolytic cell, the present invention may further include: after manufacturing the electrode, stacking one electrode and the other electrode and stacking a spacer layer such as a mesh type polyimide layer or the like, preventing contact between the electrodes and differentiating the electrodes as a cathode and an anode.

Hereinafter, the present invention will be described in more detail.

First, in step (a), a polymer resin having a cation exchange group such as a sulfonic acid group (-SO₃H), a carboxyl group (-COOH), a phosphonic group (-PO₃H₂), a phosphinic group (-HPO₂H), an arsenic group (-AsO₃H₂), a selenonic group (-SeO₃H) may be used, and a polymer resin having an anion exchanger such as a quaternary ammonium salt (-NH₃), primary, secondary, or tertiary amine (-NH₂, - NHR, -NR₂), a quaternary phosphonium group (-PR₄), a tertiary sulfonium group (-SR₃), or the like, may be used. This ion exchange polymer resin may be dissolved in the organic solvent and thereby may be present as a solution type. Specifically, for example, any one or a mixture of two or more selected from polystyrene, polysulfone, polyethersulfone, polyamide, polyester, polyimide, polyether, polyethylene, polytetrafluoroethylene, or polyglycidylmethacrylate, which have any one of the above ion exchangers, may be used as the ion exchange polymer resin, but are not limited thereto. Any resin that can have a cation exchange group or an anion exchange group may be used without limitation.

In addition, the polymer resin may preferably have a weight average molecular weight of 200,000 to 10,000,000, but is not limited thereto. The polymer resin having a weight average molecular weight of the above range is excellent in view of viscosity of an electrode slurry and property of binding electrode active materials.

The organic solvent may be selected according to the kind of polymer resin. Any one or a mixture of two or more selected from dimethylformamide, dimethylacetamide, N-methyl-2-pyrrolidone, acetone, chloroform, dichloromethane, trichloroethylene, ethanol, methanol, normal hexane, may be used as the organic solvent dissolving the above-described polymer resin. However, examples of the organic solvent are not limited thereto.

In step (a), the solid content is preferably 10 to 50 wt% at the time of preparing the polymer solution. If the solid content is below 10wt% or above 50wt%, the polymer solution has either too high or too low viscosity, and thus, the electrode slurry is not easily prepared in step (b).

Next, with reference to step (b), in which the slurry is prepared by adding an electrode active material, a conductive material, or a mixture thereof to the polymer solution, addition of the electrode active material can improve the specific surface area of the electrode and the capacitive capacitance. Also, addition of the conductive material can improve electric conductivity of the electrode.

The electrode active material may be an active carbon based material having a high specific surface area, and for example, an active carbon powder, an active carbon fiber, a carbon nanotube, a carbon aerogel, or a mixture thereof may be used as the electrode active material. The electrode active material is preferably prepared and used in a powder type. Alternatively, the electrode active material may be a metal oxide based material, and for example, RuO₂, Ni(OH)₂, MnO₂, PbO₂, TiO₂, or a mixture thereof may be used as the electrode active material or may be added to the electrode active material. The content range of this electrode active material may be controlled depending on necessary physical properties thereof. More specifically, without being limited to, an electrode active material having an average particle size of 10µm or less, or specifically 10nm to 10µm is preferably used so as to increase the specific surface area of the electrode and the capacitive capacitance. In addition, the electrode active material is preferably used in a range of 600 to 900 parts by weight based on 100 parts by weight of the polymer material having an ion exchange functional group, so as to manufacture an electrode exhibiting ion selectivity and having high capacitive capacitance.

In addition, according to the present invention, as necessary, the conductive material may be additively used together with the electrode active material, and any conductive material that can have a low electric resistance may be used without limitation. Specifically, for example, conductive carbon black, such as acetylene black, ketchen black, XCF carbon, SRF carbon, or the like may be used.

The content range of this conductive material may be controlled depending on necessary physical properties thereof. More specifically, without being limited to, a conductive material having an average particle size of 2µm or less, preferably 1µm or less, or more preferably 10nm to 1µm is used so as to increase electric conductivity of the electrode. In addition, the conductive material is not significantly limited in the use amount thereof, but the conductive material is preferably used in a range of 1 to 20 parts by weight based on 100 parts by weight of the electrode active material so as to increase electric conductivity of the electrode and the capacitive capacitance.

Next, with reference to step (c) in which the slurry is coated on the current collector, a material having excellent conductivity so that an electric field can be uniformly distributed on a surface of the manufactured electrode when current is supplied to the electrode through a power supply device can be preferably used as the current collector. The current collector may be used in a sheet, thin film, or plain weave gold net form, which includes, for example, aluminum, nickel, copper, titanium, iron, stainless steel, graphite, or a mixture thereof. In addition, an organic resin sheet, thin film, or film, which includes polyvinylidenefluoride, polystyrene, polyester, polysulfone, polyolefine, or the like, may be used.

In addition, the coating method may be performed by spray, dip coating, knife casting, doctor blade, spin coating, or the like, without limitation thereto. The coating thickness is preferably in a range of 50 to 300µm so as to decrease electric resistance of the electrode and improve deionization efficiency.

In addition, step (c) is repeatedly performed as necessary, and thus an electrode having a particular thickness can be manufactured.

Next, in step (d), the organic solvent in the slurry coated on the current collector is removed, and thereby a sheet type porous carbon electrode can be manufactured. The method for removing the organic solvent may include a method of separating the organic solvent by performing drying under normal pressure or vacuum at a temperature atmosphere of several tens or several hundreds of degrees centigrade, or using a nonsolvent. Specifically, the organic solvent may be removed by performing drying under normal pressure or vacuum at a temperature atmosphere of room temperature to 200°C. Alternatively, the current collector coated with the slurry is dipped in a nonsolvent of any one or more selected from distilled water, alcohol, dimethylformamide, dimethylacetamide, N-methyl-2-pyrrolidone, and acetone for 1 to 24 hours, thereby eluting and removing the organic solvent while occurring phase-change (solidification) of the polymer resin.

An electrochemical cell using the ion selective electrode manufactured by the manufacturing method of the present invention as only one electrode selected from a cathode and an anode or both the cathode and the anode is also included in the scope of the present invention. The electrochemical cell forms electrodes by application of electricity, and this means a form consisting of a cathode, an anode, and a spacer. This electrochemical cell includes capacitive type deionization cell, capacitor, and the like. The electrochemical cell includes also those in which cathodes and anodes are alternately stacked in two or more layers. Since the number of stacked cathodes and anodes has a relation with the capacitance, the cathodes and the anodes are properly stacked as necessary.

In other words, in cases where an electrochemical cell is manufactured by employing the electrode according to the present invention, the ion selective electrode is used as only one electrode selected from a cathode and an anode and an electrode manufactured by using a polymer binder not having an ion exchange group is used as the other electrode. Even in this case, excellent adsorption and desorption of ions can be achieved.

More preferably, the ion selective electrode is employed as both the anode and the cathode, thereby increasing the capacitive capacitance and facilitating adsorption and desorption of ions during a driving procedure of the process.

According to the present invention, in the electrochemical cell using the ion selective electrode, the electrode using a polymer resin having a cation exchanger may be used as an anode and the electrode using a polymer resin having an anion exchanger may be used as a cathode.

### [Advantageous Effects]

According to the ion exchangeable electrode of the present invention, the polymer solution having an ion exchange group is used as a binder, thereby facilitating adsorption and desorption of ions, increasing the ion adsorption and desorption rate, and improving ion adsorption efficiency. Further, the distance between electrodes can be minimized, and thus, ionic materials can be effectively and quickly adsorbed.

Further, according to the present invention, since the electrode is manufactured by using polymer binder having an ion exchange group, a separate binder does not need to be used and the manufacturing costs are decreased, and thus, the electrode of the present invention can be easily used as a capacitive type deionization electrode, and the application range of this technology can be extended from a large-scale treatment of industrial water to a small-scale treatment of home purification water.

### [Description of Drawings]

The above and other objects, features and advantages of the present invention will become apparent from the following description of preferred embodiments given in conjunction with the accompanying drawings, in which:
FIG. 1 is a graph showing deionization efficiency according to Examples 1 and 2 of the present invention and Comparative Example 1; and
FIG. 2 is a graph showing deionization efficiency of Examples 1 and 3 of the present invention.

### [Best Mode]

Hereinafter, the present invention will be described by the examples in detail, but the present invention is not limited to the following examples.

### [Preparative Example 1]

### Preparation of Slurry Having Cation exchange group

1.0g of sodium sulfonated polystyrene (cation exchange capacity = 3 meq/g) having a cation exchanger, which was produced through a sulfonation reaction, was mixed with 20g of dimethylacetamide (DMAc), to prepare a polymer solution, and then 6.0g of an activated carbon powder (specific surface area = 1600m²/g) was mixed into the polymer solution, thereby preparing a cation exchange electrode slurry.

### [Preparative Example 2]

### Preparation of Slurry Having Anion exchange group

1.0g of polystyrene (anion exchange capacity = 3 meq/g) having an ammonium chloride anion exchanger, which was produced through an amination reaction, was mixed with 20g of dimethylacetamide, to prepare a polymer solution, and then 6.0g of an activated carbon powder (specific surface area = 1600m²/g) was mixed into the polymer solution, thereby preparing an anion exchange electrode slurry.

### [Preparative Example 3]

### Preparation of Polyvinylidenefluoride Slurry

1.0g of polyvinylidenefluoride (PVdF, Mw = 275,000) was mixed with 20g of dimethyl acetaldehyde, to prepare a polymer solution, and then 8.0g of an activated carbon powder (specific surface area = 1600m²/g) was mixed into the polymer solution, thereby preparing an electrode slurry

### [Preparative Example 4]

### Preparation of Slurry Having Cation exchange group and Conductive Material Added thereto

1.0g of sodium sulfonated polystyrene (cation exchange capacity = 3 meq/g) having a cation exchanger, which was produced through a sulfonation reaction, was mixed with 20g of dimethyl acetaldehyde (DMAc), to prepare a polymer solution, and then 6.0g of an activated carbon powder (specific surface area = 1600m²/g) and 0.5g of carbon black (average diameter = 19nm) were mixed to the polymer solution, thereby preparing a cation exchange electrode slurry.

### [Preparative Example 5]

### Preparation of Slurry Having Anion exchange group and Conductive Material Added thereto

1.0g of chloro-ammoniated polystyrene (anion exchange capacity = 3 meq/g) having an anion exchanger, which was produced through an amination reaction, was mixed with 20g of dimethyl acetaldehyde, to prepare a polymer solution, and then 6.0g of an activated carbon powder (specific surface area = 1600m²/g) and 0.5g of carbon black (average diameter = 19nm) were mixed to the polymer solution, thereby preparing a cation exchange electrode slurry.

### [Example 1]

In order to find ion adsorption performance of electrodes when both a cathode and an anode are manufactured by a binder having an ion exchanger, the electrodes were manufactured such that the anode and the cathode each have an ion exchanger.

### Electrode Manufacturing

The slurry prepared from Preparative Example 1 and the slurry prepared from Preparation Example 2 were respectively coated on conductive graphite sheets (thickness: 250µm) by a doctor blade such that one surface thereof had a coating thickness of 150µm, followed by drying at room temperature, thereby manufacturing an anode having a cation exchanger and a cathode having an anion exchanger, respectively.

### [Example 2]

In order to check ion adsorption performance of electrodes when only one electrode is manufactured by a binder having an ion-exchange group, the electrodes were manufactured such that only an anode has an ion-exchange group.

### Electrode Manufacturing

The slurry prepared from Preparative Example 1 and the slurry prepared from Preparation Example 3 were respectively coated on conductive graphite sheets (thickness: 250µm) by a doctor blade such that one surface thereof had a coating thickness of 150µm, followed by drying at room temperature, thereby manufacturing an anode having a cation exchanger and a cathode made of PVdF but not having an ion-exchange group.

### [Example 3]

In order to check ion adsorption performance of electrodes when the electrodes are manufactured by adding a conductive material thereto, the electrodes having the conductive material added thereto were manufactured.

### Electrode Manufacturing

The slurry prepared from Preparation Example 4 and the slurry prepared from Preparation Example 5 were respectively coated on conductive graphite sheets (thickness: 250µm) by a doctor blade such that one surface thereof had a coating thickness of 150µm, followed by drying at room temperature, thereby manufacturing an anode having a cation exchanger and a cathode having an anion exchanger, respectively.

### [Comparative example 1]

It was tried to check ion adsorption performance of electrodes manufactured by a binder not having an ion-exchange group.

### Electrode Manufacturing

The slurry prepared from Preparation Example 3 was respectively coated on conductive graphite sheets (thickness: 250µm) by a doctor blade such that one surface thereof had a coating thickness of 150µm, followed by drying at room temperature, thereby manufacturing a cathode and an anode, respectively.

### [Experimental Example 1]

Each deionization cell was manufactured by using each of the electrodes manufactured from examples 1, 2, and 3 and the comparative example 1.

After the manufactured electrodes were cut into 10 x 10 cm², a 100µm thickness spacer (200 mesh, polyimide) was installed between the cathode and the anode such that contact between the two electrodes was prevented and fluid passed through the spacer. Each of the electrodes was pierced to form a hole of 1cm at the center thereof so that a solution flowed out from four surfaces to the center of the electrode via the spacer. An acryl plate of 15 x 15 cm² size was fixed to the outsides of the cathode and the anode by using bolts, thereby manufacturing a capacitive deionization single cell.

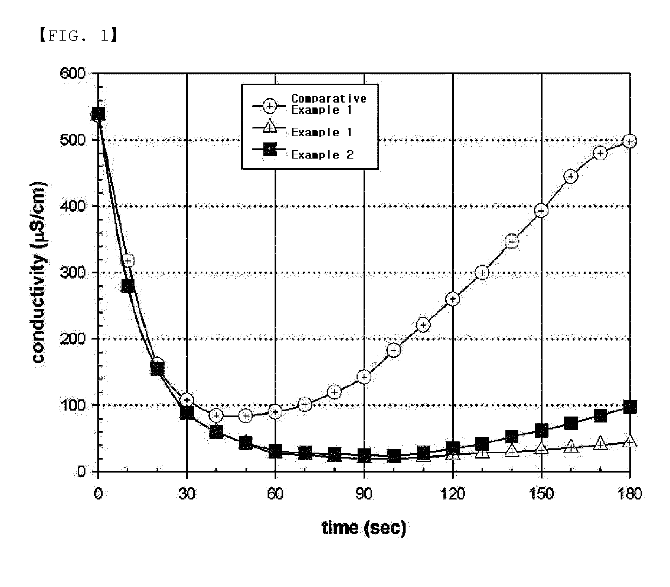

A NaCl solution of 250 mg/L was supplied at a rate of 20 mL/min while an electrode potential of 1.4V was uniformly applied. Deionization efficiency was analyzed by measuring electric conductivity of outflow water. Cell driving was carried out in a manner that the electrode potential was changed to 0.0V to perform ion desorption for 2 minutes after ion adsorption for 3 minutes was performed. Deionization experiment results for three kinds of cells were shown in FIG. 1.

As shown in FIG. 1, Example 1, in which both the cathode and the anode both were manufactured by using a polymer resin having an ion exchanger, exhibited the most excellent ion adsorption performance. Also, Example 2, in which only the anode was manufactured by using a polymer resin having an ion exchanger, exhibited a high ion adsorption performance as compared with the comparative example. Therefore, it can be seen that the present invention can be selectively employed in the cathode or the anode, and preferably employed in both the cathode and the anode.

### [Experimental Example 2]

It was tried to check a difference in ion adsorption performance according to the presence or absence of a conductive material. An ion adsorption experiment was performed on the electrodes manufactured from Examples 1 and 3 in the same manner and under the same conditions as Experimental Example 1.

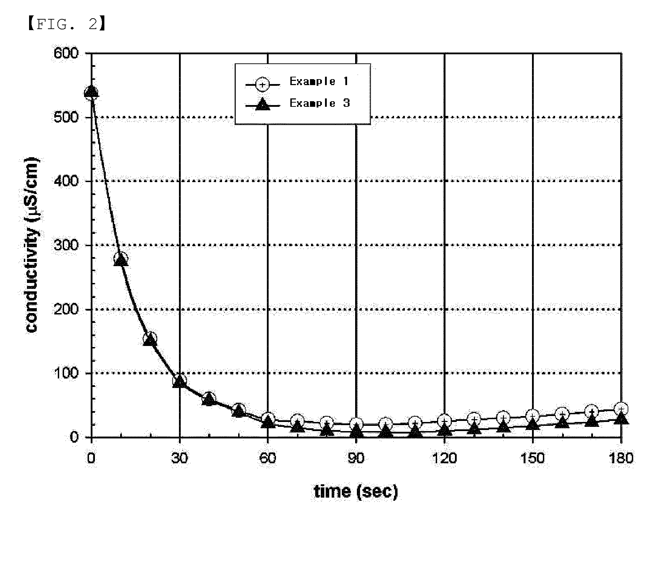

As shown in FIG. 2, it can be seen that ion adsorption performance can be further improved when the conductive material is added.

## Claims

1. A capacitive deionization electrochemical cell, comprising:
any one electrode selected from an anode manufactured by containing a cation exchange resin therein and a cathode manufactured by containing an anion exchange resin therein; and
a spacer layer separating the anode from the cathode.

2. The capacitive deionization electrochemical cell of claim 1, wherein the electrode is manufactured by preparing a slurry containing a polymer resin having the cation exchanger or a polymer resin having an anion exchanger and an electrode active material, and then coating the slurry on a current collector.

3. The capacitive deionization electrochemical cell of claim 2, wherein the polymer resin having a cation exchanger is a polymer resin having at least one cation exchanger selected from the group consisting of a sulfonic acid group (-SO₃H), a carboxyl group (-COOH), a phosphonic group (-PO₃H₂), a phosphinic group (-HPO₂H), an arsenic group (-AsO₃H₂), and a selenonic group (-SeO₃H), and the polymer resin having an anion exchanger is a polymer resin having at least one anion exchanger selected from the group consisting of a quaternary ammonium salt (-NH₃), primary, secondary, or tertiary amine (-NH₂, -NHR, -NR₂), a quaternary phosphonium group (-PR₄), and a tertiary sulfonium group (-SR₃).

4. The capacitive deionization electrochemical cell of claim 1, wherein the electrode active material is at least one active carbon based material selected from an active carbon powder, an active carbon fiber, a carbon nanotube, and a carbon aerogel; one or two or more metal oxide based materials selected from RuO₂, Ni(OH)₂, MnO₂, PbO₂, and TiO₂; and a mixture thereof.

5. The capacitive deionization electrochemical cell of claim 1, wherein the current collector is in a sheet, thin film, or plain weave gold net form, including aluminum, nickel, copper, titanium, iron, stainless steel, graphite, or a mixture thereof.

6. The capacitive deionization electrochemical cell of claim 1, wherein the current collector is in an organic resin sheet, thin film, or plain weave gold net form, selected from an organic polymer including polyvinylidenefluoride, polystyrene, polyester, and polyolefine.

7. The capacitive deionization electrochemical cell of claim 1, wherein the slurry further contains a conductive material.

8. The capacitive deionization electrochemical cell of claim 7, wherein the conductive material is conductive carbon black.

9. A deionizing apparatus for water treatment, using the electrochemical cell of any one of claims 1 to 8.

10. A metal collecting apparatus for collecting heavy metals or noble metals in waste water, using the electrochemical cell of any one of claims 1 to 8.
